# EUROPEAN PATENT APPLICATION

(11) **EP 4 610 544 A1**
(43) Date of publication of application: **03.09.2025**
(21) Application number: 23882696.0
(22) Date of filing: 25.10.2023
(51) Int. Cl.: F21S 2/00, F21V 9/00, G02B 5/18, F21Y 113/10, F21Y 115/30

(54) **ILLUMINATION SYSTEM, ILLUMINATION LIGHT OBSERVATION SYSTEM, ILLUMINATION LIGHT IMAGING SYSTEM, ILLUMINATION DEVICE, AND DESIGN METHOD FOR ILLUMINATION SYSTEM**

(30) Priority: 26.10.2022 JP 2022171468
(71) Applicant: Dai Nippon Printing Co., Ltd., Tokyo 162-8001 (JP)
(72) Inventor: KURASHIGE Makio, Tokyo 162-8001 (JP); NISHIO Shumpei, Tokyo 162-8001 (JP)
(74) Representative: Müller-Boré & Partner Patentanwälte PartG mbB
(86) International application number: PCT/JP2023/038603
(87) International publication number: WO 2024/090492

(57) **Abstract**

An illumination system 30 includes a projection surface 40 and an illumination device 50. The projection surface 40 is parallel to a first direction D1 and a second direction D2 orthogonal to the first direction D1. The illumination device 50 projects a projection pattern 41 extending in the first direction D1 onto the projection surface 40. The illumination device 50 includes a light source 51 and a diffractive optical element 55 that diffracts light from the light source 51 to form the projection pattern 41. The diffractive optical element 55 includes a plurality of elemental diffractive optical elements 56 each of which diffracts light from the light source 51. A minimum length Lb1 among the lengths of the projection pattern 41 in the second direction D2 is shorter than a maximum length Lc among the lengths that intersect a plane parallel to the projection surface 40, of the light incident on the diffractive optical element 55 and is longer than a maximum length La among the lengths that intersect the plane parallel to the projection surface 40, of the elemental diffractive optical elements 56.

## Description

### Technical Field

The present disclosure relates to an illumination system, an illumination-light viewing system including the illumination system, an illumination-light imaging system including the illumination system, an illumination device, and a method of designing the illumination system.

### Background Art

An illumination device, such as that described in Unexamined Patent Application Publication No. 2015-162424, is known that projects a projection pattern onto a projection surface such as a road surface. For example, for work on a road surface, an illumination device projects a projection pattern with a line shape extending in one direction.

There has been a demand for a reduction in a width of a projection pattern extending in one direction. When the width of a projection pattern is reduced, the light used to project the projection pattern is concentrated within a narrow area, resulting in the projection pattern being viewed with increased brightness. Accordingly, even in strong ambient light, the projection pattern can be easily recognized. By reducing the width of the projection pattern, the error in identifying the center of a line indicated by the projection pattern is reduced. By reducing the width of the projection pattern, the line shape of the projection pattern can be easily and accurately recognized.

### Disclosure of Invention

There is a case of viewing light that is projected from an illumination device at a short distance. When the light used to project the projection pattern is concentrated within a narrow area, high-intensity light enters the eyes when viewing the light projected from the illumination device at a short distance. This is not preferable for eye safety. An object of the present disclosure is to reduce a width of a projection pattern, which extends in one direction, while reducing the intensity of light at a short distance.

An illumination system of the present disclosure includes a projection surface that is parallel to a first direction and a second direction orthogonal to the first direction and an illumination device that projects a projection pattern extending in the first direction onto the projection surface. The illumination device includes a light source and a diffractive optical element that diffracts light from the light source to form the projection pattern. The diffractive optical element includes a plurality of elemental diffractive optical elements each of which diffracts light from the light source. A minimum length among lengths of the projection pattern in the second direction is shorter than a maximum length among lengths that intersect a plane parallel to the projection surface, of light incident on the diffractive optical element and is longer than a maximum length among lengths that intersect a plane parallel to the projection surface, of the elemental diffractive optical elements.

According to the present disclosure, a width of a projection pattern extending in one direction can be reduced while the intensity of light at a short distance is reduced.

### Brief Description of Drawings

[Fig. 1] Fig. 1 is a perspective view illustrating an example of an illumination-light viewing system according to a first embodiment.
[Fig. 2] Fig. 2 is a perspective view illustrating a viewer wearing a viewing assistance device.
[Fig. 3] Fig. 3 is a top view illustrating an example of an illumination system according to the first embodiment.
[Fig. 4] Fig. 4 is a perspective view illustrating an example of an illumination device according to the first embodiment.
[Fig. 5] Fig. 5 is a view of a diffractive optical element according to the first embodiment when viewed from a first direction.
[Fig. 6] Fig. 6 is a side view illustrating an example of the illumination device according to the first embodiment.
[Fig. 7] Fig. 7 is a top view illustrating a modification of the illumination system according to the first embodiment.
[Fig. 8] Fig. 8 is a view of the diffractive optical element of the illumination system illustrated in Fig. 7 when viewed from the first direction.
[Fig. 9] Fig. 9 is a side view illustrating an example of an illumination-light imaging system according to a second embodiment.
[Fig. 10] Fig. 10 is a plan view illustrating a display device of the illumination-light imaging system illustrated in Fig. 9.
[Fig. 11] Fig. 11 is a perspective view illustrating an example of an illumination device according to a third embodiment.
[Fig. 12] Fig. 12 is a view of an optical element according to the third embodiment when viewed from the first direction.

### Description of Embodiments

An embodiment of the present disclosure will now be described with reference to the drawings. In the drawings attached to the present specification, for ease of illustration and understanding, the scale, the aspect ratio, and the like may sometimes be appropriately changed and exaggerated from those of an actual object.

In this specification, terms used to specify shapes, geometric conditions, and their degrees, such as "parallel," "orthogonal," and "same," as well as numerical values of lengths and angles, are not strictly limited to their literal meanings, and they are interpreted to include a range in which similar functionality can be expected.

The embodiments and modifications of the present disclosure relate to [1] to [18] below.
[1] An illumination system comprising:
   a projection surface that is parallel to a first direction and a second direction orthogonal to the first direction; and
   an illumination device that projects a projection pattern extending in the first direction onto the projection surface,
   wherein the illumination device includes a light source and a diffractive optical element that diffracts light from the light source to form the projection pattern,
   wherein the diffractive optical element includes a plurality of elemental diffractive optical elements each of which diffracts light from the light source, and
   wherein a minimum length among lengths of the projection pattern in the second direction is shorter than a maximum length among lengths that intersect a plane parallel to the projection surface, of light incident on the diffractive optical element and is longer than a maximum length among lengths that intersect a plane parallel to the projection surface, of the elemental diffractive optical elements.
[2] An illumination system comprising:
   a projection surface that is parallel to a first direction and a second direction orthogonal to the first direction; and
   an illumination device that projects a projection pattern extending in the first direction onto the projection surface,
   wherein the illumination device includes a light source and a diffractive optical element that diffracts light from the light source to form the projection pattern,
   wherein the diffractive optical element includes a plurality of elemental diffractive optical elements each of which diffracts light from the light source, and
   wherein a length of the projection pattern in the second direction at an end portion of the projection pattern, the end portion being closer to the illumination device in the first direction, is shorter than a maximum length among lengths that intersect a plane parallel to the projection surface, of light incident on the diffractive optical element and is longer than a maximum length among lengths that intersect a plane parallel to the projection surface, of the elemental diffractive optical elements.
[3] An illumination system comprising:
   a projection surface that is parallel to a first direction and a second direction orthogonal to the first direction; and
   an illumination device that projects a projection pattern extending in the first direction onto the projection surface,
   wherein the illumination device includes a light source and a diffractive optical element that diffracts light from the light source to form the projection pattern,
   wherein the diffractive optical element includes a plurality of elemental diffractive optical elements each of which diffracts light from the light source, and
   wherein a length of the projection pattern in the second direction at a position where illuminance is maximum is shorter than a maximum length among lengths that intersect a plane parallel to the projection surface, of light incident on the diffractive optical element and is longer than a maximum length among lengths that intersect a plane parallel to the projection surface, of the elemental diffractive optical elements.
[4] The illumination system according to any one of [1] to [3],
   wherein light incident on the diffractive optical element is wider in a direction of a line where the diffractive optical element intersects a plane parallel to the projection surface than in a third direction that is non-parallel to the projection surface, and
   wherein light diffracted by the diffractive optical element expands more in the third direction than in a direction of a line where the diffractive optical element intersects a plane parallel to the projection surface.
[5] The illumination system according to any one of [1] to [4],
   wherein a length of light incident on the diffractive optical element in a direction of a line where the diffractive optical element intersects a plane parallel to the projection surface is 7 mm or more.
[6] The illumination system according to any one of [1] to [5],
   wherein, in a third direction that is non-parallel to the projection surface, radiant intensity of light diffracted by the diffractive optical element is higher at a position farther from the projection surface than at a position closer to the projection surface.
[7] An illumination system comprising:
   a projection surface that is parallel to a first direction and a second direction orthogonal to the first direction; and
   an illumination device that projects a projection pattern extending in the first direction onto the projection surface,
   wherein the illumination device includes a light source and an optical element that acts on light from the light source to form the projection pattern, and
   wherein a minimum length among lengths of the projection pattern in the second direction is shorter than a maximum length among lengths that intersect a plane parallel to the projection surface, of light incident on the optical element.
[8] An illumination-light viewing system comprising:
   the illumination system according to any one of [1] to [7]; and
   an optical filter having a higher average transmittance at a wavelength of light projected onto the projection surface by the illumination device than at another wavelength.
[9] An illumination-light imaging system comprising:
   the illumination system according to any one of [1] to [7]; and
   an imaging device that captures an image of the projection pattern.
[10] The illumination-light imaging system according to [9],
   wherein the imaging device includes an optical filter having a higher average transmittance at a wavelength of light projected onto the projection surface by the illumination device than at another wavelength.
[11] An illumination device that projects a projection pattern extending in a first direction onto a projection surface that is parallel to the first direction and a second direction orthogonal to the first direction, the illumination device comprising:
   a light source; and
   a diffractive optical element that diffracts light from the light source to form the projection pattern,
   wherein the diffractive optical element includes a plurality of elemental diffractive optical elements each of which diffracts light from the light source, and
   wherein a minimum length among lengths of the projection pattern in the second direction is shorter than a maximum length among lengths that intersect a plane parallel to the projection surface, of light incident on the diffractive optical element and is longer than a maximum length among lengths that intersect a plane parallel to the projection surface, of the elemental diffractive optical elements.
[12] An illumination device that projects a projection pattern extending in a first direction onto a projection surface that is parallel to the first direction and a second direction orthogonal to the first direction, the illumination device comprising:
   a light source; and
   a diffractive optical element that diffracts light from the light source to form the projection pattern,
   wherein the diffractive optical element includes a plurality of elemental diffractive optical elements each of which diffracts light from the light source, and
   wherein a length of the projection pattern in the second direction at an end portion of the projection pattern, the end portion being closer to the illumination device in the first direction, is shorter than a maximum length among lengths that intersect a plane parallel to the projection surface, of light incident on the diffractive optical element and is longer than a maximum length among lengths that intersect a plane parallel to the projection surface, of the elemental diffractive optical elements.
[13] An illumination device that projects a projection pattern extending in a first direction onto a projection surface that is parallel to the first direction and a second direction orthogonal to the first direction, the illumination device comprising:
   a light source; and
   a diffractive optical element that diffracts light from the light source to form the projection pattern,
   wherein the diffractive optical element includes a plurality of elemental diffractive optical elements each of which diffracts light from the light source, and
   wherein a length of the projection pattern in the second direction at a position where illuminance is maximum is shorter than a maximum length among lengths that intersect a plane parallel to the projection surface, of light incident on the diffractive optical element and is longer than a maximum length among lengths that intersect a plane parallel to the projection surface, of the elemental diffractive optical elements.
[14] An illumination device that projects a projection pattern extending in a first direction onto a projection surface that is parallel to the first direction and a second direction orthogonal to the first direction, the illumination device comprising:
   a light source; and
   an optical element that acts on light from the light source to form the projection pattern,
   wherein a minimum length among lengths of the projection pattern in the second direction is shorter than a maximum length among lengths that intersect a plane parallel to the projection surface, of light incident on the optical element.
[15] A method of designing an illumination system that projects, by using an illumination device including a diffractive optical element, a projection pattern extending in a first direction onto a projection surface parallel to the first direction and a second direction orthogonal to the first direction, the method comprising:
   a step of setting a diffraction characteristic of the diffractive optical element such that a minimum length among lengths of the projection pattern in the second direction is shorter than a maximum length among lengths that intersect a plane parallel to the projection surface, of light incident on the diffractive optical element; and
   a step of setting a diffraction characteristic of a plurality of elemental diffractive optical elements, which are included in the diffractive optical element, such that a minimum length among lengths of the projection pattern in the second direction is longer than a maximum length among lengths that intersect a plane parallel to the projection surface, of the elemental diffractive optical elements.
[16] A method of designing an illumination system that projects, by using an illumination device including a diffractive optical element, a projection pattern extending in a first direction onto a projection surface parallel to the first direction and a second direction orthogonal to the first direction, the method comprising:
   a step of setting a diffraction characteristic of the diffractive optical element such that a length of the projection pattern in the second direction at an end portion of the projection pattern, the end portion being closer to the illumination device in the first direction, is shorter than a maximum length among lengths that intersect a plane parallel to the projection surface, of light incident on the diffractive optical element; and
   a step of setting a diffraction characteristic of a plurality of elemental diffractive optical elements, which are included in the diffractive optical element, such that a length of the projection pattern in the second direction at an end portion of the projection pattern, the end portion being closer to the illumination device in the first direction, is longer than a maximum length among lengths that intersect a plane parallel to the projection surface, of the elemental diffractive optical elements.
[17] A method of designing an illumination system that projects, by using an illumination device including a diffractive optical element, a projection pattern extending in a first direction onto a projection surface parallel to the first direction and a second direction orthogonal to the first direction, the method comprising:
   a step of setting a diffraction characteristic of the diffractive optical element such that a length of the projection pattern in the second direction at a position where illuminance is maximum is shorter than a maximum length among lengths that intersect a plane parallel to the projection surface, of light incident on the diffractive optical element; and
   a step of setting a diffraction characteristic of a plurality of elemental diffractive optical elements, which are included in the diffractive optical element, such that a length of the projection pattern in the second direction at a position where illuminance is maximum is longer than a maximum length among lengths that intersect a plane parallel to the projection surface, of the elemental diffractive optical elements.
[18] A method of designing an illumination system that projects, by using an illumination device including an optical element, a projection pattern extending in a first direction onto a projection surface parallel to the first direction and a second direction orthogonal to the first direction, the method comprising:
   a step of setting an optical characteristic of the optical element such that a minimum length among lengths of the projection pattern in the second direction is shorter than a maximum length among lengths that intersect a plane parallel to the projection surface, of light incident on the optical element.

### <First Embodiment>

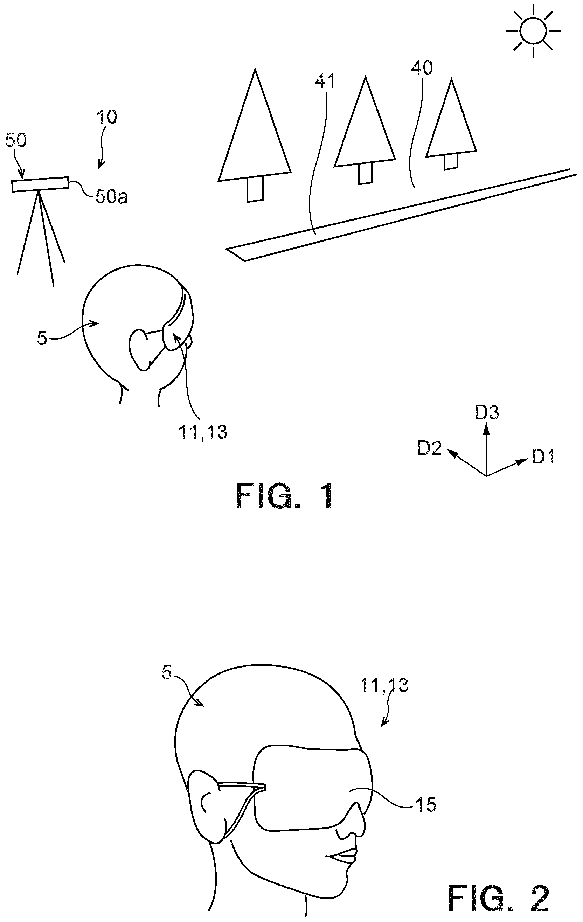

Fig. 1 is a perspective view illustrating an illumination-light viewing system according to the first embodiment. As illustrated in Fig. 1, an illumination-light viewing system 10 of the first embodiment includes an illumination system 30 and a viewing assistance device 11. The illumination system 30 has a projection surface 40 and includes an illumination device 50. The illumination device 50 emits light so as to project a projection pattern 41 onto the projection surface 40. A viewer 5 can view the projection pattern 41 projected on the projection surface 40 A viewer 5 is wearing the viewing assistance device 11.

The viewing assistance device 11 includes a wearable device 13 and an optical filter 15. The wearable device 13 enables the viewer 5 to easily wear the viewing assistance device 11. The wearable device 13 may hold the optical filter 15. While the viewer 5 is wearing the viewing assistance device 11, the optical filter 15 faces the eyes of the viewer 5. The viewer 5 wearing the viewing assistance device 11 views the projection pattern 41 through the optical filter 15.

In the example illustrated in Fig. 1, the wearable device 13 is a pair of glasses. The wearable device 13 is not limited to the example illustrated in Fig. 1, and it may take any form as long as the optical filter 15 can be positioned so as to face the eyes of a viewer. For example, the wearable device 13 may be a pair of goggles or a pair of contact lenses.

The optical filter 15 has a higher average transmittance in a specific wavelength range than in other wavelength ranges. In the illumination-light viewing system 10, the optical filter 15 has a higher average transmittance at a wavelength of light that is projected onto the projection surface 40 by the illumination device 50 than at other wavelengths. The average transmittance of the optical filter 15 at the wavelength of the light projected onto the projection surface 40 by the illumination device 50 may be 50% or more, 70% or more, or 80% or more. The average transmittance of the optical filter 15 at the wavelength of the light projected onto the projection surface 40 by the illumination device 50 may be 100% or less or 90% or less. The average transmittance of the optical filter 15 at wavelengths other than the wavelength of the light projected onto the projection surface 40 by the illumination device 50 may be 1% or less, 0.1% or less, or 0.01% or less. The optical filter 15 selectively enables the light projected onto the projection surface 40 by the illumination device 50 to pass therethrough.

The transmittance refers to the total light transmittance measured at an incident angle of 0 degrees by using a spectrophotometer conforming to JIS K 0115 ("UV-Visible-Near-Infrared Spectrophotometer UV-3100PC" manufactured by Shimadzu Corporation). The average transmittance is the average value of the transmittance measured at 1 nm intervals in the visible wavelength range. The visible wavelength range is 380 nm or more and 780 nm or less.

It is preferable that the wavelength range of the light projected by the illumination device 50 be sufficiently narrow so that the optical filter 15 selectively enables the light projected by the illumination device 50 to pass therethrough. The light projected by the illumination device 50 may be coherent light.

The projection surface 40 is a display surface that displays the projection pattern 41, which is projected by the illumination device 50, thereby enabling the viewer 5 to view the projection pattern 41. The projection surface 40 is spaced apart from the illumination device 50. It is preferable that the projection surface 40 be a flat surface so as to display the projection pattern 41 appropriately. As illustrated in Fig. 1, the projection surface 40 is a surface parallel to a first direction D1 and a second direction D2. The second direction D2 is orthogonal to the first direction D1. For example, the projection surface 40 may be a road surface, a ground surface such as that of a sidewalk, a sports field, a park, or another location, a water surface such as a sea surface, or a part of a building structure, such as an exterior wall surface, an interior wall surface, a passageway, a floor, or a ceiling, of a facility such as a school, a company, a building, a factory, a meeting hall, an auditorium, a gymnasium, a stadium, or a venue.

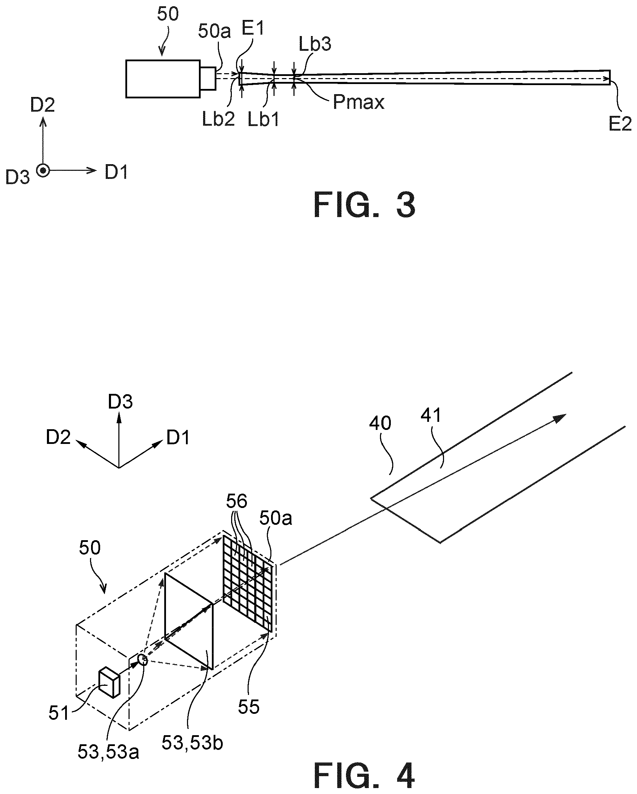

The projection pattern 41 is projected onto the projection surface 40 and is thereby viewed by the viewer 5. The projection pattern 41 includes light in the visible wavelength range so as to be viewable by the viewer 5. The projection pattern 41 extends in the first direction D1. Fig. 3 is a top view illustrating the projection pattern 41 projected onto the projection surface 40 by the illumination device 50. As illustrated in Fig. 3, the projection pattern 41 has a line shape whose longitudinal direction is parallel to the first direction D1. The length of the projection pattern 41 in the first direction D1 is longer than a maximum length among lengths of the projection pattern 41 in the second direction D2. For example, the length of the projection pattern 41 in the first direction D1 is 50 times or more the maximum length among the lengths of the projection pattern 41 in the second direction D2. The length of the projection pattern 41 in the first direction D1 is, for example, 1 m or more and 200 m or less. The length of the projection pattern 41 in the second direction D2 is, for example, 1 mm or more and 50 mm or less.

The length of the projection pattern 41 in the first direction D1 is determined as follows.

A position at which the illuminance of the projection pattern 41 is at its maximum, is determined as a maximum illuminance position Pmax. A position that is located between the illumination device 50 and the maximum illuminance position Pmax in the first direction D1 and at which the illuminance of the projection pattern 41 is 2% of the maximum illuminance is set as a first end portion E1. At the position at which the illuminance is 2% of the maximum illuminance, the illuminance is too low for the projection pattern 41 to be viewed. A portion of the projection pattern 41 having an illuminance of 2% or more of the maximum illuminance is viewed as the projection pattern 41. The first end portion E1 is an end portion of the projection pattern 41 that is closer to the illumination device 50 in the first direction D1. A position that is farther from the illumination device 50 than the maximum illuminance position Pmax is in the first direction D1 and at which the illuminance of the projection pattern 41 is 2% of the maximum illuminance is set as a second end portion E2. The second end portion E2 is an end portion of the projection pattern 41 that is farther from the illumination device 50 in the first direction D1. The length between the first end portion E1 and the second end portion E2 is the length of the projection pattern 41 in the first direction D1. The projection pattern 41 extends between the first end portion E1 and the second end portion E2 in the first direction D1.

The length of the projection pattern 41 in the second direction D2 can be determined at each position in the first direction D1. The length of the projection pattern 41 in the second direction D2 is determined as follows. A second-direction maximum illuminance position at which the illuminance of the projection pattern 41 is at its maximum in the second direction D2 is set. Two end portions that are spaced apart from the second-direction maximum illuminance position in the second direction D2 and at which the illuminance of the projection pattern 41 is 1/e² of the maximum illuminance are then set. The length between these two end positions is the length of the projection pattern 41 in the second direction D2. The length of the projection pattern 41 in the second direction D2 corresponds to the width of the projection pattern 41.

The above-mentioned "e" is Napier's constant.

The illuminance is a value measured by using an illuminometer ("illuminance spectroradiometer CL-500A" manufactured by Konica Minolta, Inc.) conforming to JIS C 1609-1:2006.

The illumination device 50 projects the projection pattern 41 onto the projection surface 40 by using light emitted from an emission unit 50a. In the example illustrated in Fig. 1, the illumination device 50 is fixed in place by using a tripod. The illumination device 50 may be movable. The illumination device 50 may be applied to a moving body such as a vehicle, a ship, an aircraft, or a train.

Fig. 4 is a perspective view illustrating an example of the configuration of the illumination device 50. As illustrated in Fig. 4, the illumination device 50 includes a light source 51, a shaping optical system 53, and a diffractive optical element 55. The illumination device 50 may further include a housing that accommodates the light source 51, the shaping optical system 53, and the diffractive optical element 55.

The light source 51 emits, for example, coherent light that is light with uniform wavelength and phase. The coherent light has favorable linearity. When the illumination device 50 projects the projection pattern 41 onto the projection surface 40, which is located far from the illumination device 50, it is preferable that the light source 51 emit the coherent light. The light source 51 that emits the coherent light may be a laser light source that generates laser light by oscillation. The light source 51 may be a semiconductor laser light source. In the example illustrated in Fig. 4, the light source 51 includes a single coherent light source. Coherent light of a color that corresponds to the wavelength of the coherent light generated by oscillation of the light source 51 is projected by the illumination device 50 onto the projection surface 40. The light source 51 is not limited to the example illustrated in Fig. 4 and may include a plurality of coherent light sources. For example, the light source 51 may generate coherent light of red, green, and blue wavelengths by oscillation.

The shaping optical system 53 shapes the light emitted by the light source 51. The shaping optical system 53 shapes the shape of the light from the light source 51 in a cross section orthogonal to the optical axis of the light and the three-dimensional shape of the light. The shaping optical system 53 may enlarge the cross-sectional area of the light in the cross section orthogonal to the optical axis of the light. In the example illustrated in Fig. 4, the shaping optical system 53 shapes the light emitted by the light source 51 into collimated light with an increased width. The shaping optical system 53 functions as a collimating optical system. In the example illustrated in Fig. 4, the shaping optical system 53 includes a first shaping lens 53a and a second shaping lens 53b that are arranged along an optical path. The first shaping lens 53a shapes the light emitted by the light source 51 into divergent light. The second shaping lens 53b shapes the divergent light generated by the first shaping lens 53a into collimated light. The second shaping lens 53b functions as a collimating lens. The light shaped by the shaping optical system 53 is incident on the diffractive optical element 55.

The diffractive optical element 55 diffracts the light that has passed through the shaping optical system 53 so as to form the projection pattern 41. The light diffracted by the diffractive optical element 55 is projected onto the projection surface 40. The projection pattern 41 has a shape that corresponds to a diffraction pattern of the diffractive optical element 55. The diffractive optical element 55 is designed so as to project the desired projection pattern 41.

As illustrated in Fig. 4, the diffractive optical element 55 includes a plurality of elemental diffractive optical elements 56. Each of the elemental diffractive optical elements 56 is a minute, thin-plate-like member. The plurality of elemental diffractive optical elements 56 are arranged in a two-dimensional array on the same plane in the diffractive optical element 55 without gaps. Each of the elemental diffractive optical elements 56 diffracts light. Light diffracted by the elemental diffractive optical elements 56 is emitted from the emission unit 50a. The plurality of elemental diffractive optical elements 56 each diffract the light from the shaping optical system 53. The light diffracted by each of the elemental diffractive optical elements 56 is projected onto the projection surface 40, so that the projection pattern 41 is formed. The light diffracted by each of the elemental diffractive optical elements 56 may form the entire projection pattern 41 or may form each of a portion of the projection pattern 41. The light diffracted by the diffractive optical element 55 is dispersed by the elemental diffractive optical elements 56 and emitted from the emission unit 50a. This suppresses excessive brightness at each position of the diffractive optical element 55 and laser safety can be improved.

The elemental diffractive optical elements 56 are, for example, hologram elements. When the elemental diffractive optical elements 56 are hologram elements, the diffraction characteristics of the elemental diffractive optical elements 56 can be easily designed.

The elemental diffractive optical elements 56 may each be fabricated as a computer-generated hologram (CGH). A computer-generated hologram is fabricated by calculating a structure with a diffraction characteristic on a computer. When the elemental diffractive optical elements 56 are computer-generated holograms, the need for generating object light and reference light using a light source and an optical system, as well as the need for recording interference fringes onto a hologram recording material through exposure can be eliminated. The illumination device 50 is intended to project the projection pattern 41 onto the projection surface 40 at a predetermined position with respect to the illumination device 50, with a predetermined contour shape, a predetermined size, and a predetermined orientation. By inputting information regarding the projection surface 40 as parameters into a computer, a structure having diffraction characteristics that allow diffracted light to be projected onto the projection surface 40, such as, for example, an uneven surface, can be identified through computation on the computer. By forming the identified structure through, for example, resin molding, the elemental diffractive optical elements 56, which serve as computer-generated holograms, can be fabricated in a simplified process at low cost.

The design of the elemental diffractive optical elements 56 may employ, for example, the iterative Fourier transform method. In the case of employing the iterative Fourier transform method, processing may be performed on the premise that the projection surface 40 is located far from the elemental diffractive optical elements 56, and the projection pattern 41 projected onto the projection surface 40 may be a Fraunhofer diffraction image. In this case, the projection surface 40 may be non-parallel to diffractive surfaces of the elemental diffractive optical elements 56.

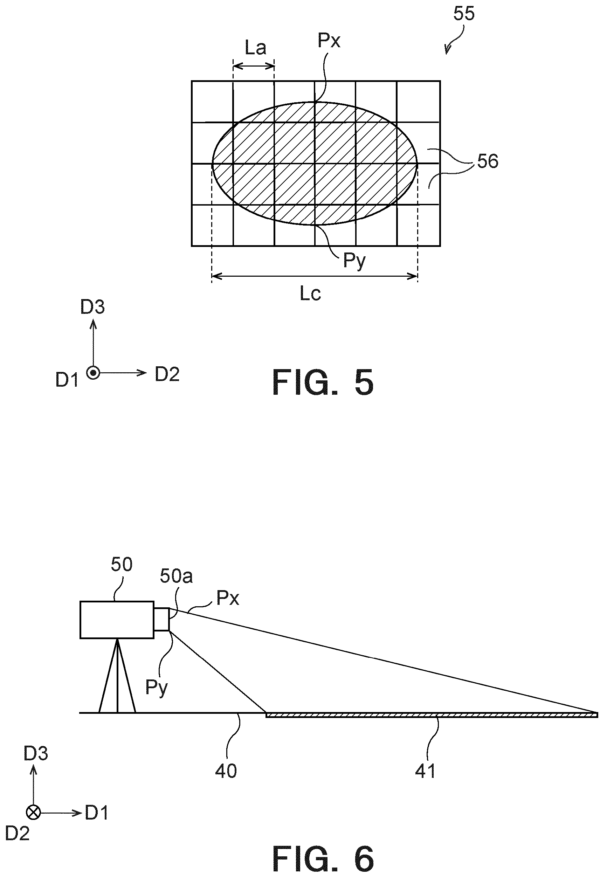

Fig. 5 is a view of the diffractive optical element 55 in the emission unit 50a when viewed from the first direction. In Fig. 5, a portion of the diffractive optical element 55 where light is incident is illustrated by hatching. As illustrated in Fig. 5, the light that is incident on the diffractive optical element 55 is wider in a direction of a line where the diffractive optical element 55 intersects a plane parallel to the projection surface than in the third direction D3. In the example illustrated in Fig. 5, the direction of the line where the diffractive optical element 55 intersects the plane parallel to the projection surface coincides with the second direction D2. The third direction D3 is a direction that is non-parallel to the projection surface 40. The third direction D3 is a direction that is non-parallel to both the first direction D1 and the second direction D2. The third direction D3 may be a direction that is inclined with respect to the first direction D1 and orthogonal to the second direction D2. In the example illustrated in Fig. 5, the light that is incident on the diffractive optical element 55 has an elliptical shape that is wider in the second direction D2 than in the third direction D3. In the direction of the line where the diffractive optical element 55 intersects the plane parallel to the projection surface, the length of the light incident on the diffractive optical element 55 is 7 mm or more.

Fig. 6 is a side view illustrating the light diffracted by the diffractive optical element 55 and then emitted from the emission unit 50a. As illustrated in Fig. 6, the light diffracted by the diffractive optical element 55 expands significantly in the third direction D3. As a result, the projection pattern 41 extending in the first direction D1 is projected. The light diffracted by the diffractive optical element 55 expands only slightly in the direction of the line where the diffractive optical element 55 intersects the plane parallel to the projection surface 40, that is, the second direction D2 in the example illustrated in Fig. 6. The light diffracted by the diffractive optical element 55 expands more in the third direction D3 than in the direction of the line where the diffractive optical element 55 intersects the plane parallel to the projection surface 40. As a result, the projection pattern 41 is projected with a length in the first direction D1 that is longer than the maximum length among the lengths in the second direction D2.

In the third direction D3, the radiant intensity of the light diffracted by the diffractive optical element 55 is higher at positions farther from the projection surface 40 than at positions closer to the projection surface 40. In the example illustrated in Fig. 5 and Fig. 6, the radiant intensity of the light diffracted by the diffractive optical element 55 at a position Py that is farther from the projection surface 40 of the diffractive optical element 55 is higher than the radiant intensity of the light diffracted by the diffractive optical element 55 at a position Px that is closer to the projection surface 40 of the diffractive optical element 55.

The radiant intensity of light refers to the energy of light contained per unit solid angle. The radiant intensity of light is a value defined in JIS Z 8000-7:2014. The radiant intensity is calculated by using the irradiance measured at a position sufficiently distant from a light source and the distance from the light source. More specifically, an irradiance meter is placed at a distance of d [m] from the light source so as to face the light source, and when the irradiance measured in this situation is denoted by E [W/m²], the radiant intensity I [W/sr] is calculated as I = E×d². The irradiance used for calculating the radiant intensity is a value measured by using an illuminometer ("spectroradiometer CL-500A" manufactured by Konica Minolta, Inc.) conforming to JIS C 1609-1:2006.

The illumination device 50 is oriented in a predetermined direction with respect to the projection surface 40, so that it can project the predetermined projection pattern 41. The illumination device 50 may be provided with an alignment mark, allowing its orientation with respect to the projection surface 40, onto which the predetermined projection pattern 41 can be projected, to be easily recognized. The alignment mark is, for example, a pattern, a projection, or a depression provided on a housing of the illumination device 50.

Once the light diffracted by the elemental diffractive optical elements 56 has been emitted from the emission unit 50a, it expands in the second direction D2. The length in the second direction D2 of the projection pattern 41 near the illumination device 50 is longer than the length of each of the elemental diffractive optical elements 56, the length intersecting the plane parallel to the projection surface 40, that is, a length La of each of the elemental diffractive optical elements 56 in the second direction D2 in the example illustrated in Fig. 5. The length La of each of the elemental diffractive optical elements 56, the length La intersecting the plane parallel to the projection surface 40, is, for example, 0.3 mm or more and 6.0 mm or less.

In the first embodiment, the light diffracted by the entire diffractive optical element 55 is diffracted by each of the elemental diffractive optical elements 56 so as to be narrowed in the second direction D2 in the projection pattern 41. In other words, the light diffracted by the entire diffractive optical element 55 converges in the second direction D2. In the case where the elemental diffractive optical elements are designed to have the same diffraction characteristics, the light diffracted by them does not overlap at the same position on the projection surface 40, and thus, the projection pattern 41 gradually decreases in radiant intensity at an end portion of the pattern, which reduces contrast when viewed, making it more difficult to recognize the pattern during viewing. By appropriately designing the diffractive characteristics of the elemental diffractive optical elements 56, the light diffracted by the entire diffractive optical element 55 can be narrowed in the second direction D2 in the projection pattern 41. Since the diffractive optical element 55 includes the plurality of elemental diffractive optical elements 56, the light diffracted by the diffractive optical element 55 can converge in the second direction D2. The length in the second direction D2 of the projection pattern 41 near the illumination device 50 is shorter than a maximum length among the lengths that intersect the plane parallel to the projection surface 40, of the light incident on the diffractive optical element 55, that is, a maximum length Lc in the second direction D2 in the example illustrated in Fig. 5, is longer than. The maximum length Lc among the lengths that intersect the plane parallel to the projection surface 40, of the light incident on the diffractive optical element 55 is, for example, 4.0 mm or more and 60 mm or less.

The length in the second direction D2 of the projection pattern 41 near the illumination device 50 is a minimum length Lb1 among the lengths of the projection pattern 41 in the second direction D2. In other words, the minimum length Lb1 among the lengths of the projection pattern 41 in the second direction D2 is shorter than the maximum length Lc among the lengths that intersect the plane parallel to the projection surface 40, of the light incident on the diffractive optical element 55 and is longer than the length La of each of the elemental diffractive optical elements 56, the length La intersecting the plane parallel to the projection surface 40. The minimum length Lb1 among the lengths of the projection pattern 41 in the second direction D2 is, for example, 2.0 mm or more and 20 mm or less.

Alternatively, the length in the second direction D2 of the projection pattern 41 near the illumination device 50 is a length Lb2 of the projection pattern 41 in the second direction D2 at the first end portion E1, which is the end portion closer to the illumination device 50 in the first direction D1. In other words, the length Lb2 of the projection pattern 41 in the second direction D2 at the end portion closer to the illumination device 50 in the first direction D1 is shorter than the maximum length Lc among the lengths that intersect the plane parallel to the projection surface 40, of the light incident on the diffractive optical element 55 and is longer than the length La of each of the elemental diffractive optical elements 56, the length La intersecting the plane parallel to the projection surface 40. The length Lb2 of the projection pattern 41 in the second direction D2 at the first end portion E1, which is the end portion closer to the illumination device 50 in the first direction D1, is, for example, 2.0 mm or more and 40 mm or less.

The length of the projection pattern 41 in the second direction D2 at the second end portion E2, which is the end portion farther from the illumination device 50 in the first direction D1, may be shorter than the maximum length Lc among the lengths that intersect the plane parallel to the projection surface 40, of the light incident on the diffractive optical element 55 and may be longer than the length La of each of the elemental diffractive optical elements 56, the length La intersecting the plane parallel to the projection surface 40.

Alternatively, the length in the second direction D2 of the projection pattern 41 near the illumination device 50 is a length Lb3 of the projection pattern 41 in the second direction D2 at the maximum illuminance position Pmax, which is the position where the illuminance is maximum. In other words, the length Lb3 of the projection pattern 41 in the second direction D2 at the position where the illuminance is maximum is shorter than the maximum length Lc among the lengths that intersect the plane parallel to the projection surface 40, of the light incident on the diffractive optical element 55 and is longer than the length La of each of the elemental diffractive optical elements 56, the length La intersecting the plane parallel to the projection surface 40. The length Lb3 of the projection pattern 41 in the second direction D2 at the position where the illuminance is maximum is, for example, 2.0 mm or more and 30 mm or less.

The illumination system 30 is designed such that the diffraction characteristics of the diffractive optical element 55 and the diffraction characteristics of the elemental diffractive optical elements 56 satisfy the above-mentioned conditions. In other words, the diffraction characteristics of the diffractive optical element 55 are set such that the minimum length Lb1 among the lengths of the projection pattern 41 in the second direction D2 is shorter than the maximum length among the lengths that intersect the plane parallel to the projection surface 40, of the light incident on the diffractive optical element 55. The diffraction characteristics of the elemental diffractive optical elements are set such that the minimum length Lb1 among the lengths of the projection pattern 41 in the second direction D2 is longer than the maximum length La among the lengths that intersect the plane parallel to the projection surface 40, of the plurality of elemental diffractive optical elements 56.

Alternatively, the diffraction characteristics of the diffractive optical element 55 are set such that the length Lb2 of the projection pattern 41 in the second direction D2 at the first end portion E1, which is the end portion closer to the illumination device 50 in the first direction D1, is shorter than the maximum length Lc among the lengths that intersect the plane parallel to the projection surface 40, of the light incident on the diffractive optical element 55. The diffraction characteristics of the elemental diffractive optical elements 56 are set such that the length Lb2 of the projection pattern 41 in the second direction D2 at the first end portion E1, which is the end portion closer to the illumination device 50 in the first direction D1, is longer than the maximum length La among the lengths that intersect the plane parallel to the projection surface 40, of the plurality of elemental diffractive optical elements 56.

Alternatively, the diffraction characteristics of the diffractive optical element 55 are set such that the length Lb3 of the projection pattern 41 in the second direction D2 at the position where the illuminance is maximum is shorter than the maximum length Lc among the lengths that intersect the plane parallel to the projection surface 40, of the light incident on the diffractive optical element 55. The diffraction characteristics of the elemental diffractive optical elements 56 are set such that the length Lb3 of the projection pattern 41 in the second direction D2 at the position where the illuminance is maximum is longer than the maximum length La among the lengths that intersect the plane parallel to the projection surface 40, of the plurality of elemental diffractive optical elements 56.

Operations of the illumination-light viewing system 10 and the illumination system 30 will now be described.

As illustrated in, for example, Fig. 1, the illumination device 50 projects the projection pattern 41 onto the projection surface 40. The viewer 5 can view the projection pattern 41 projected on the projection surface 40. The projection pattern 41 may display various information. For example, the projection pattern 41 may display a planned work area to the viewer 5 who performs work. A worker, who is the viewer 5, can use the projection pattern 41 when, for example, drawing white or orange lines on roads, sidewalks, or parking lots. The projection pattern 41 is not limited to this example and may display an arrow or the like that indicates a direction. According to this example, the projection pattern 41 may display a travel route or an evacuation route.

When a projection pattern that has a line shape extending in one direction is projected by an illumination device, there has been a demand for a reduction in the width of the projection pattern. When the width of the projection pattern is reduced, the light used to project the projection pattern is concentrated within a narrow area resulting in the projection pattern being viewed with increased brightness. Accordingly, even in strong ambient light, such as sunlight, the projection pattern can be easily recognized. By reducing the width of the projection pattern, the error in identifying the center of a line indicated by the projection pattern is reduced. By reducing the width of the projection pattern, the line shape of the projection pattern can be easily and accurately recognized.

The illumination devices of the related art include lenses such as cylindrical lenses and rod lenses. An illumination device of the related art projects a projection pattern having a line shape by condensing and diffusing light by using a lens. In order to reduce the width of a projection pattern projected by an illumination device of the related art, light is condensed by a lens. Light that is condensed by the lens converges at a certain point but diffuses as it moves away from the point. It is difficult to reduce the width of an entire projection pattern extending with sufficient length in one direction. High-intensity light enters the eyes when viewing the light condensed by the lens is viewed at a short distance from an illumination device. This is not preferable for eye safety. If the intensity of light that is emitted from a light source is reduced in order to suppress high-intensity light from entering the eyes, the projection pattern becomes darker. This makes it difficult to recognize the line shape of the projection pattern.

In the first embodiment, the length in the second direction D2 of the projection pattern 41 near the illumination device 50 is longer than each of the lengths that intersect the plane parallel to the projection surface 40, of the elemental diffractive optical elements 56 and is shorter than the maximum length among the lengths that intersect the plane parallel to the projection surface 40, of the light incident on the diffractive optical element 55. More specifically, the minimum length Lb1 among the lengths of the projection pattern 41 in the second direction D2 is shorter than the maximum length Lc among the lengths that intersect the plane parallel to the projection surface 40, of the light incident on the diffractive optical element 55 and is longer than the length La of each of the elemental diffractive optical elements 56, the length La intersecting the plane parallel to the projection surface 40. Alternatively, the length Lb2 of the projection pattern 41 in the second direction D2 at the end portion closer to the illumination device 50 in the first direction D1 is shorter than the maximum length Lc among the lengths that intersect the plane parallel to the projection surface 40, of the light incident on the diffractive optical element 55 and is longer than the length La of each of the elemental diffractive optical elements 56, the length La intersecting the plane parallel to the projection surface 40. Alternatively, the length Lb3 of the projection pattern 41 in the second direction D2 at the position where the illuminance is maximum is shorter than the maximum length Lc among the lengths that intersect the plane parallel to the projection surface 40, of the light incident on the diffractive optical element 55 and is longer than the length La of each of the elemental diffractive optical elements 56, the length La intersecting the plane parallel to the projection surface 40. In the projection pattern 41, the light diffracted by each of the elemental diffractive optical elements 56 expands in a direction intersecting the plane parallel to the projection surface 40, and the light diffracted by the entire diffractive optical element 55 is narrowed in the direction intersecting the plane parallel to the projection surface 40. Since each of the elemental diffractive optical elements 56 diffuses the light, high-intensity light is less likely to enter the eyes even when the light is viewed at a short distance from the illumination device 50. The light diffracted by the entire diffractive optical element 55 is condensed, and thus, the width of the projection pattern 41 can be reduced. The width of the projection pattern 41 in the second direction D2, the projection pattern 41 extending in the first direction D1, can be reduced while the intensity of the light at a short distance is reduced.

The light incident on the diffractive optical element 55 is wider in the direction of the line where the diffractive optical element 55 intersects the plane parallel to the projection surface 40 than in the third direction D3, and the light diffracted by the diffractive optical element 55 expands more in the third direction D3 than in the direction of the line where the diffractive optical element 55 intersects the plane parallel to the projection surface 40. The light emitted from the illumination device 50 expands both in the third direction D3 and the direction of the line where the diffractive optical element 55 intersects the plane parallel to the projection surface 40. The light expands in a planar manner. The radiant intensity of the light emitted from the emission unit 50a decreases. The intensity of the light at a short distance can be reduced.

In the direction of the line where the diffractive optical element 55 intersects the plane parallel to the projection surface 40, the length of the light that is incident on the diffractive optical element 55 is 7 mm or more. In the direction of the line where the diffractive optical element 55 intersects the plane parallel to the projection surface 40, the length of the light emitted from the illumination device 50 is 7 mm or more. Even when viewing the light, which is emitted from the illumination device 50, at a short distance, the intensity of the light viewed at the short distance can be reduced as the light expands sufficiently. According to IEC 60825-1:2014, the size of the human eye's pupil in a dark place is specified as 7 mm in diameter. Since the length of the light emitted from the illumination device expands to 7 mm or more, eye damage can be reduced even when viewing the light from the illumination device 50 at a short distance.

In the third direction D3, the radiant intensity of the light diffracted by the diffractive optical element 55 is higher at positions farther from the projection surface 40 than at positions closer to the projection surface 40. Of the light diffracted by the diffractive optical element 55, the light at a position away from the projection surface 40 in the third direction D3 affects the brightness of the projection pattern 41 at a position away from the illumination device 50 in the first direction D1. The radiant intensity of the light diffracted by the diffractive optical element 55 is stronger at positions farther from the projection surface 40 than at positions closer to the projection surface 40, so that the brightness of the projection pattern 41 in the first direction D1 can be made more uniform.

The illumination-light viewing system 10 includes the illumination system 30 and the viewing assistance device 11. The viewing assistance device 11 includes the optical filter 15. The viewer 5 can view the projection pattern 41 by wearing the viewing assistance device 11. The viewer 5 wearing the viewing assistance device 11 views the projection pattern 41 through the optical filter 15. The optical filter 15 has a higher average transmittance at a wavelength of light that is projected onto the projection surface 40 by the illumination device 50 than at other wavelengths. By viewing the projection pattern 41 through the optical filter 15, the brightness of ambient light can be suppressed while maintaining the brightness of the viewed projection pattern 41. Even in strong ambient light such as, for example, sunlight, the viewer 5 wearing the viewing assistance device 11 can clearly view the projection pattern 41.

The illumination system 30 of the first embodiment includes the projection surface 40 that is parallel to the first direction D1 and the second direction D2, which is orthogonal to the first direction D1, and the illumination device 50 that projects the projection pattern 41 extending in the first direction D1 onto the projection surface 40. The illumination device 50 includes the light source 51 and the diffractive optical element 55 that diffracts light from the light source 51 so as to form the projection pattern 41. The diffractive optical element 55 includes the plurality of elemental diffractive optical elements 56 each of which diffracts the light from the light source 51. The minimum length Lb1 among the lengths of the projection pattern 41 in the second direction D2 is shorter than the maximum length Lc among the lengths that intersect the plane parallel to the projection surface 40, of the light incident on the diffractive optical element 55 and is longer than the length La of each of the elemental diffractive optical elements 56, the length La intersecting the plane parallel to the projection surface 40. Alternatively, the length Lb2 of the projection pattern 41 in the second direction D2 at the end portion closer to the illumination device 50 in the first direction D1 is shorter than the maximum length Lc among the lengths that intersect the plane parallel to the projection surface 40, of the light incident on the diffractive optical element 55 and is longer than the length La of each of the elemental diffractive optical elements 56, the length La intersecting the plane parallel to the projection surface 40. Alternatively, the length Lb3 of the projection pattern 41 in the second direction D2 at the position where the illuminance is maximum is shorter than the maximum length Lc among the lengths that intersect the plane parallel to the projection surface 40, of the light incident on the diffractive optical element 55 and is longer than the length La of each of the elemental diffractive optical elements 56, the length La intersecting the plane parallel to the projection surface 40. In the projection pattern 41, the light diffracted by each of the elemental diffractive optical elements 56 expands in a direction intersecting the plane parallel to the projection surface 40, and the light diffracted by the entire diffractive optical element 55 is narrowed in the direction intersecting the plane parallel to the projection surface 40. Since each of the elemental diffractive optical elements 56 diffuses the light, high-intensity light is less likely to enter the eyes even when the light is viewed at a short distance from the illumination device 50. The light diffracted by the entire diffractive optical element 55 is condensed, and thus, the width of the projection pattern 41 can be reduced. The width of the projection pattern 41 in the second direction D2, the projection pattern 41 extending in the first direction D1, can be reduced while the intensity of the light at a short distance is reduced.

Various changes can be made to the above-described embodiment.

The viewer 5 may view the projection pattern 41, which is projected on the projection surface 40, without wearing the viewing assistance device 11. The viewer 5 may also view the projection pattern 41 projected on the projection surface 40 without using the optical filter 15.

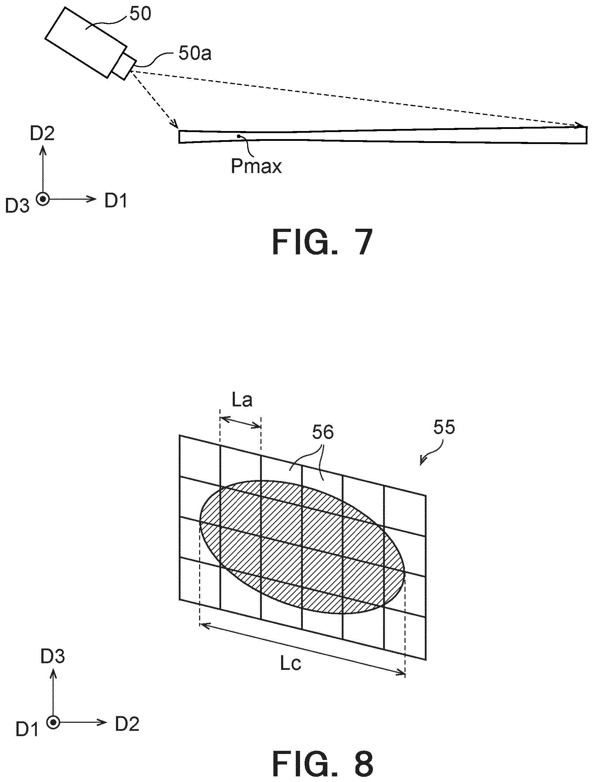

A modification of the illumination system 30 of the first embodiment is illustrated in Fig. 7 and Fig. 8. Fig. 7 is a top view of the illumination system 30 of the modification. Fig. 8 is a view of the diffractive optical element 55 in the emission unit 50a of the modification when viewed from the first direction D1. In the above-described first embodiment, the illumination device 50 projects the projection pattern 41 onto the projection surface 40 along the first direction D1. In the modification illustrated in Fig. 7, the projection pattern 41 is projected onto the projection surface 40 from a direction inclined with respect to the first direction D1. By suitably designing the diffraction characteristics of the diffractive optical element 55, the projection pattern 41 can be properly projected onto the projection surface 40 even from a direction inclined with respect to the first direction D1.

In the present modification, as illustrated in Fig. 8, the direction of the line where the diffractive optical element 55 intersects the plane parallel to the projection surface does not coincide with the second direction D2. The maximum length Lc among the lengths that intersect the plane parallel to the projection surface 40, of the light incident on the diffractive optical element 55 does not coincide with the length of the diffractive optical element 55 along the second direction D2. The length La of each of the elemental diffractive optical elements 56, the length La intersecting the plane parallel to the projection surface, does not coincide with the length of each of the elemental diffractive optical elements 56 along the second direction D2.

Also in the present modification, as in the above-described first embodiment, the minimum length Lb1 among the lengths of the projection pattern 41 in the second direction D2 is shorter than the maximum length Lc among the lengths that intersect the plane parallel to the projection surface 40, of the light incident on the diffractive optical element 55 and is longer than the length La of each of the elemental diffractive optical elements 56, the length La intersecting the plane parallel to the projection surface 40. Alternatively, the length Lb2 of the projection pattern 41 in the second direction D2 at the end portion closer to the illumination device 50 in the first direction D1 is shorter than the maximum length Lc among the lengths that intersect the plane parallel to the projection surface 40, of the light incident on the diffractive optical element 55 and is longer than the length La of each of the elemental diffractive optical elements 56, the length La intersecting the plane parallel to the projection surface 40. Alternatively, the length Lb3 of the projection pattern 41 in the second direction D2 at the position where the illuminance is maximum is shorter than the maximum length Lc among the lengths that intersect the plane parallel to the projection surface 40, of the light incident on the diffractive optical element 55 and is longer than the length La of each of the elemental diffractive optical elements 56, the length La intersecting the plane parallel to the projection surface 40. As a result, the width of the projection pattern 41 in the second direction D2, the projection pattern 41 extending in the first direction D1, can be reduced while the intensity of the light at a short distance is reduced.

### <Second Embodiment>

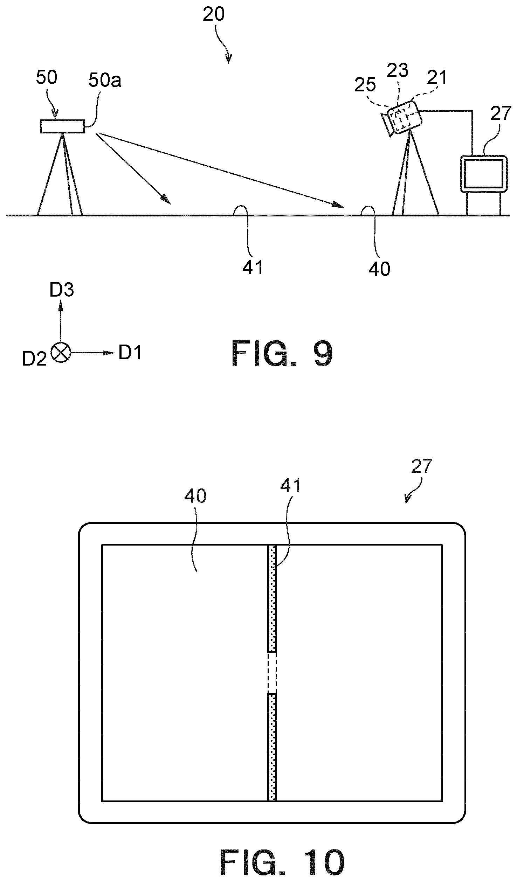

Fig. 9 is a side view illustrating an illumination-light imaging system of a second embodiment. As illustrated in Fig. 9, an illumination-light imaging system 20 of the second embodiment includes the illumination system 30 and an imaging device 21. The illumination system 30 has a configuration similar to that of the illumination system 30 described in the first embodiment.

The imaging device 21 captures an image of the projection pattern 41 projected by the illumination system 30.

The viewer 5 can view the projection pattern 41 through the image captured by the imaging device 21. The imaging device 21 includes an imaging element 23 and an optical filter 25. The optical filter 25 has a configuration similar to that of the optical filter 15 described in the first embodiment. The imaging device 21 captures an image of light that is incident on the imaging element 23. The imaging device 21 is configured such that the light that has passed through the optical filter 25 is incident on the imaging element 23. The imaging device 21 captures an image of the light that has passed through the optical filter 25. The viewer 5 can view the projection pattern 41 through the captured image of the light that has passed through the optical filter 25. Even in strong ambient light such as, for example, sunlight, the viewer 5 can clearly view the projection pattern 41.

The imaging device 21 may not necessarily include the optical filter 25. The viewer 5 may view the projection pattern 41 through an image of light captured without allowing the light to pass through the optical filter 25.

As shown in Fig. 9, the illumination-light imaging system 20 may further include a display device 27. The display device 27 is connected to the imaging device 21. The display device 27 displays an image captured by the imaging device 21. The viewer 5 may view an image of the projection pattern 41 displayed on the display device 27.

Fig. 10 illustrates an example of an image displayed on the display device 27. In the example illustrated in Fig. 10, the display device 27 displays a portion of the projection pattern 41.

In the example illustrated in Fig. 10, ambient light or the like makes it difficult to view a portion of the projection pattern 41 extending in the first direction D1. By processing the image captured by the imaging device 21 with an image processing apparatus, which is not illustrated, an unviewed portion of the projection pattern 41 can be predicted and supplemented from the viewed portion of the projection pattern 41. The display device 27 may display an image in which the unviewed portion of the projection pattern 41 has been supplemented.

The imaging device 21 and the display device 27 may be movable. The imaging device 21 and the display device 27 may be applied to a moving body such as a vehicle, a ship, an aircraft, or a train.

### <Third Embodiment>

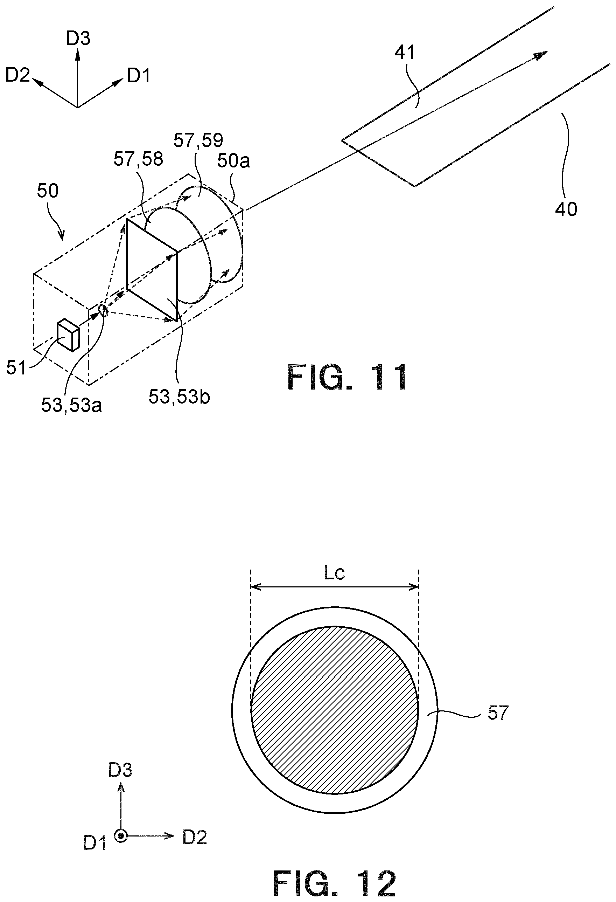

Fig. 11 is a perspective view illustrating the illumination device 50 of a third embodiment. The illumination device 50 of the third embodiment can be replaced with the illumination devices 50 of the first embodiment and the second embodiment. The illumination systems 30 of the first embodiment and the second embodiment may include the illumination device 50 of the third embodiment instead of the illumination device 50 of each embodiment.

In the illumination system 30 including the illumination device 50 of the third embodiment, the projection pattern 41 that is projected onto the projection surface 40 has a line shape with its longitudinal direction along the first direction D1. The length of the projection pattern 41 in the first direction D1 is, for example, 0.1 m or more and 100 m or less.

As illustrated in Fig. 11, the illumination device 50 of the third embodiment includes the light source 51, the shaping optical system 53, and an optical element 57. The light source 51 and the shaping optical system 53 have configurations similar to those of the light source 51 and the shaping optical system 53 described in the first embodiment. The optical element 57 acts on the light from the light source 51. The optical element 57 includes a first lens 58 and a second lens 59. In the illumination device 50, the light shaped by the shaping optical system 53 passes through the first lens 58 and the second lens 59 and is emitted from the emission unit 50a.

The first lens 58 converges the light incident on it in the second direction D2. The first lens 58 is, for example, a convex lens that is curved in the second direction D2. The focal length of the first lens 58 is longer than the length of the projection pattern 41 in the first direction D1. As a result, the light that has passed through the first lens 58 does not diffuse even with increasing distance from the illumination device 50 in the projection pattern 41 and is narrowed in the second direction D2 across almost the entire projection pattern 41.

The second lens 59 diffuses the light incident on it in the third direction D3. The second lens 59 is, for example, a concave lens that is curved in the third direction D3. The light that has passed through the second lens 59 expands in the third direction D3, and the projection pattern 41, which extends in the first direction D1, can be formed.

Fig. 12 is a view of the optical element 57 in the emission unit 50a when viewed from the first direction D1. In Fig. 12, a portion of the optical element 57 where light is incident is illustrated by hatching. The light that passes through the optical element 57 is caused by the first lens 58 to be narrowed in the second direction D2 across almost the entire projection pattern 41. The minimum length Lb1 among the lengths of the projection pattern in the second direction D2 is shorter than a maximum length among the lengths that intersect the plane parallel to the projection surface 40, of the light incident on the optical element 57, that is, the maximum length Lc among the lengths in the second direction D2 in the example illustrated in Fig. 12.

The illumination system 30 is designed such that the optical characteristics of the optical element 57 satisfy the above-mentioned conditions. In other words, the optical characteristics of the optical element 57 are set such that the minimum length Lb1 among the lengths of the projection pattern 41 in the second direction D2 is shorter than the maximum length Lc among the lengths that intersect the plane parallel to the projection surface 40, of the light incident on the optical element 57.

Since the light is expanded in the third direction D3 by the second lens 59, high-intensity light is less likely to enter the eyes even when the light is viewed at a short distance from the illumination device 50. The first lens 58 converges the light incident on it in the second direction D2, so that the width of the projection pattern 41 can be reduced. The width of the projection pattern 41 in the second direction D2, the projection pattern 41 extending in the first direction D1, can be reduced while the intensity of the light at a short distance is reduced.

The embodiments and their modifications may be suitably combined with each other.

### Reference Signs List

5 viewer
10 illumination-light viewing system
11 viewing assistance device
15 optical filter
20 illumination-light imaging system
21 imaging device
25 optical filter
30 illumination system
40 projection surface
41 projection pattern
50 illumination device
51 light source
53 shaping optical system
55 diffractive optical element
56 elemental diffractive optical element
57 optical element
58 first lens
59 second lens

## Claims

1. An illumination system comprising:
a projection surface that is parallel to a first direction and a second direction orthogonal to the first direction; and
an illumination device that projects a projection pattern extending in the first direction onto the projection surface,
wherein the illumination device includes a light source and a diffractive optical element that diffracts light from the light source to form the projection pattern,
wherein the diffractive optical element includes a plurality of elemental diffractive optical elements each of which diffracts light from the light source, and
wherein a minimum length among lengths of the projection pattern in the second direction is shorter than a maximum length among lengths that intersect a plane parallel to the projection surface, of light incident on the diffractive optical element and is longer than a maximum length among lengths that intersect a plane parallel to the projection surface, of the elemental diffractive optical elements.

2. An illumination system comprising:
a projection surface that is parallel to a first direction and a second direction orthogonal to the first direction; and
an illumination device that projects a projection pattern extending in the first direction onto the projection surface,
wherein the illumination device includes a light source and a diffractive optical element that diffracts light from the light source to form the projection pattern,
wherein the diffractive optical element includes a plurality of elemental diffractive optical elements each of which diffracts light from the light source, and
wherein a length of the projection pattern in the second direction at an end portion of the projection pattern, the end portion being closer to the illumination device in the first direction, is shorter than a maximum length among lengths that intersect a plane parallel to the projection surface, of light incident on the diffractive optical element and is longer than a maximum length among lengths that intersect a plane parallel to the projection surface, of the elemental diffractive optical elements.

3. An illumination system comprising:
a projection surface that is parallel to a first direction and a second direction orthogonal to the first direction; and
an illumination device that projects a projection pattern extending in the first direction onto the projection surface,
wherein the illumination device includes a light source and a diffractive optical element that diffracts light from the light source to form the projection pattern,
wherein the diffractive optical element includes a plurality of elemental diffractive optical elements each of which diffracts light from the light source, and
wherein a length of the projection pattern in the second direction at a position where illuminance is maximum is shorter than a maximum length among lengths that intersect a plane parallel to the projection surface, of light incident on the diffractive optical element and is longer than a maximum length among lengths that intersect a plane parallel to the projection surface, of the elemental diffractive optical elements.

4. The illumination system according to any one of claims 1 to 3,
wherein light incident on the diffractive optical element is wider in a direction of a line where the diffractive optical element intersects a plane parallel to the projection surface than in a third direction that is non-parallel to the projection surface, and
wherein light diffracted by the diffractive optical element expands more in the third direction than in a direction of a line where the diffractive optical element intersects a plane parallel to the projection surface.

5. The illumination system according to any one of claims 1 to 3,
wherein a length of light incident on the diffractive optical element in a direction of a line where the diffractive optical element intersects a plane parallel to the projection surface is 7 mm or more.

6. The illumination system according to any one of claims 1 to 3,
wherein, in a third direction that is non-parallel to the projection surface, radiant intensity of light diffracted by the diffractive optical element is higher at a position farther from the projection surface than at a position closer to the projection surface.

7. An illumination system comprising:
a projection surface that is parallel to a first direction and a second direction orthogonal to the first direction; and
an illumination device that projects a projection pattern extending in the first direction onto the projection surface,
wherein the illumination device includes a light source and an optical element that acts on light from the light source to form the projection pattern, and
wherein a minimum length among lengths of the projection pattern in the second direction is shorter than a maximum length among lengths that intersect a plane parallel to the projection surface, of light incident on the optical element.

8. An illumination-light viewing system comprising:
the illumination system according to any one of claims 1 to 3 or 7; and
an optical filter having a higher average transmittance at a wavelength of light projected onto the projection surface by the illumination device than at another wavelength.

9. An illumination-light imaging system comprising:
the illumination system according to any one of claims 1 to 3 or 7; and
an imaging device that captures an image of the projection pattern.

10. The illumination-light imaging system according to claim 9,
wherein the imaging device includes an optical filter having a higher average transmittance at a wavelength of light projected onto the projection surface by the illumination device than at another wavelength.

11. An illumination device that projects a projection pattern extending in a first direction onto a projection surface that is parallel to the first direction and a second direction orthogonal to the first direction, the illumination device comprising:
a light source; and
a diffractive optical element that diffracts light from the light source to form the projection pattern,
wherein the diffractive optical element includes a plurality of elemental diffractive optical elements each of which diffracts light from the light source, and
wherein a minimum length among lengths of the projection pattern in the second direction is shorter than a maximum length among lengths that intersect a plane parallel to the projection surface, of light incident on the diffractive optical element and is longer than a maximum length among lengths that intersect a plane parallel to the projection surface, of the elemental diffractive optical elements.

12. An illumination device that projects a projection pattern extending in a first direction onto a projection surface that is parallel to the first direction and a second direction orthogonal to the first direction, the illumination device comprising:
a light source; and
a diffractive optical element that diffracts light from the light source to form the projection pattern,
wherein the diffractive optical element includes a plurality of elemental diffractive optical elements each of which diffracts light from the light source, and
wherein a length of the projection pattern in the second direction at an end portion of the projection pattern, the end portion being closer to the illumination device in the first direction, is shorter than a maximum length among lengths that intersect a plane parallel to the projection surface, of light incident on the diffractive optical element and is longer than a maximum length among lengths that intersect a plane parallel to the projection surface, of the elemental diffractive optical elements.

13. An illumination device that projects a projection pattern extending in a first direction onto a projection surface that is parallel to the first direction and a second direction orthogonal to the first direction, the illumination device comprising:
a light source; and
a diffractive optical element that diffracts light from the light source to form the projection pattern,
wherein the diffractive optical element includes a plurality of elemental diffractive optical elements each of which diffracts light from the light source, and
wherein a length of the projection pattern in the second direction at a position where illuminance is maximum is shorter than a maximum length among lengths that intersect a plane parallel to the projection surface, of light incident on the diffractive optical element and is longer than a maximum length among lengths that intersect a plane parallel to the projection surface, of the elemental diffractive optical elements.

14. An illumination device that projects a projection pattern extending in a first direction onto a projection surface that is parallel to the first direction and a second direction orthogonal to the first direction, the illumination device comprising:
a light source; and
an optical element that acts on light from the light source to form the projection pattern,
wherein a minimum length among lengths of the projection pattern in the second direction is shorter than a maximum length among lengths that intersect a plane parallel to the projection surface, of light incident on the optical element.

15. A method of designing an illumination system that projects, by using an illumination device including a diffractive optical element, a projection pattern extending in a first direction onto a projection surface parallel to the first direction and a second direction orthogonal to the first direction, the method comprising:
a step of setting a diffraction characteristic of the diffractive optical element such that a minimum length among lengths of the projection pattern in the second direction is shorter than a maximum length among lengths that intersect a plane parallel to the projection surface, of light incident on the diffractive optical element; and
a step of setting a diffraction characteristic of a plurality of elemental diffractive optical elements, which are included in the diffractive optical element, such that a minimum length among lengths of the projection pattern in the second direction is longer than a maximum length among lengths that intersect a plane parallel to the projection surface, of the elemental diffractive optical elements.

16. A method of designing an illumination system that projects, by using an illumination device including a diffractive optical element, a projection pattern extending in a first direction onto a projection surface parallel to the first direction and a second direction orthogonal to the first direction, the method comprising:
a step of setting a diffraction characteristic of the diffractive optical element such that a length of the projection pattern in the second direction at an end portion of the projection pattern, the end portion being closer to the illumination device in the first direction, is shorter than a maximum length among lengths that intersect a plane parallel to the projection surface, of light incident on the diffractive optical element; and
a step of setting a diffraction characteristic of a plurality of elemental diffractive optical elements, which are included in the diffractive optical element, such that a length of the projection pattern in the second direction at an end portion of the projection pattern, the end portion being closer to the illumination device in the first direction, is longer than a maximum length among lengths that intersect a plane parallel to the projection surface, of the elemental diffractive optical elements.

17. A method of designing an illumination system that projects, by using an illumination device including a diffractive optical element, a projection pattern extending in a first direction onto a projection surface parallel to the first direction and a second direction orthogonal to the first direction, the method comprising:
a step of setting a diffraction characteristic of the diffractive optical element such that a length of the projection pattern in the second direction at a position where illuminance is maximum is shorter than a maximum length among lengths that intersect a plane parallel to the projection surface, of light incident on the diffractive optical element; and
a step of setting a diffraction characteristic of a plurality of elemental diffractive optical elements, which are included in the diffractive optical element, such that a length of the projection pattern in the second direction at a position where illuminance is maximum is longer than a maximum length among lengths that intersect a plane parallel to the projection surface, of the elemental diffractive optical elements.

18. A method of designing an illumination system that projects, by using an illumination device including an optical element, a projection pattern extending in a first direction onto a projection surface parallel to the first direction and a second direction orthogonal to the first direction, the method comprising:
a step of setting an optical characteristic of the optical element such that a minimum length among lengths of the projection pattern in the second direction is shorter than a maximum length among lengths that intersect a plane parallel to the projection surface, of light incident on the optical element.
